# EUROPÄISCHE PATENTSCHRIFT

(11) **EP 1 000 390 B1**
(45) Veröffentlichungstag und Bekanntmachung des Hinweises auf die Patenterteilung: **18.05.2005**
(21) Anmeldenummer: 98943645.6
(22) Anmeldetag: 08.07.1998
(51) Int. Cl.: G05B 19/042

(54) **SCHALTUNGSANORDNUNG UND VERFAHREN ZUR SPEICHERPLATZVERWALTUNG UND ZUR ABARBEITUNG VON ANWENDERPROGRAMMEN IN KLEINSTEUERUNGEN**
CIRCUIT CONFIGURATION AND METHODS OF STORAGE MANAGEMENT AND APPLICATION OF USER PROGRAMS IN SMALL CONTROL UNITS
CIRCUIT ET PROCEDE POUR GERER L'ESPACE MEMOIRE ET POUR EXECUTER DES PROGRAMMES UTILISATEUR DANS DES MINICOMMANDES

(30) Priorität: 28.07.1997 DE 19732324
(43) Veröffentlichungstag der Anmeldung: 17.05.2000
(73) Patentinhaber: Moeller GmbH, 53115 Bonn (DE)
(72) Erfinder: CULCA, Horea-Stefan, D-53721 Siegburg (DE); KRESS, Wolfram, D-53721 Siegburg (DE)
(74) Vertreter: Schohe, Stefan
(86) Internationale Anmeldenummer: PCT/DE1998/001879
(87) Internationale Veröffentlichungsnummer: WO 1999/006895

(56) Entgegenhaltungen:
- EP-A- 0 489 227
- WO-A-90/05339
- US-A- 4 884 103
- PATENT ABSTRACTS OF JAPAN vol. 013, no. 422 (P-933), 20. September 1989 & JP 01 154226 A (NEC CORP), 16. Juni 1989

## Beschreibung

Die vorliegende Erfindung betrifft die Verwendung einer Schaltungsanordnung zur Speicherplatzverwaltung und zur Abarbeitung von Anwenderprogrammen in Kleinsteuerungen gemäß dem Oberbegriff des Anspruchs 1 sowie Verfahren zur Abarbeitung der Anwenderprogramme unter Verwendung der Schaltungsanordnung. Kleinsteuerungen sind eine neue Gattung von speicherprogrammierbaren Steuerungen. Durch diese Art von Steuerungen wird das weite Feld der speicherprogrammierbaren Steuerungen sinnvoll ergänzt. Der Benutzer eines derartigen Gerätes ist in der Lage, kleinste Steuerungsaufgaben, wie die Steuerung von Rolläden, Lichtsystemen oder dergleichen, zu realisieren ohne eine große und teure speicherprogrammierbare Steuerung verwenden zu müssen.

Die Hardware von herkömmlichen speicherprogrammierbaren Steuerungen besteht im wesentlichen aus drei großen Teilen: - einer Zentraleinheit, - einer Speichereinheit sowie - weiterer Peripherie und Schnittstellenanschlüssen. Die Zentraleinheit führt das entsprechende Anwenderprogramm mittels logischer Verknüpfungen, Berechnungen, Adressierungen u.s.w. aus. Der Speicher beinhaltet das auszuführende Anwenderprogramm sowie das Betriebssystem und ggf. weitere notwendige Daten. Die Peripherie und die Schnittstellen stellen der Zentraleinheit weitere Arbeitsmittel, wie Zeitbausteine, Zähler und dergleichen sowie Verbindungsmittel zur Außenwelt (Standardschnittstellen und/oder spezifische Schnittstellen) zur Verfügung. Dabei läßt sich der Speicher je nach Funktion in verschiedene Arten aufteilen:
- Codespeicher zum Speichern des ausführbaren Codes des Betriebssystems. Dieser Speicher ist in der Regel als nichtflüchtiger Speicher in Form von ROM-, EPROM-, Flash- oder E²PROM-Speicher ausgebildet und muß von der Zentraleinheit in der Normalfunktion als Code gelesen werden.
- Arbeitsspeicher zum zwischenzeitlichen Speichern von Daten während des Betriebs der Steuerung. Dieser Speicher muß daher als les- und beschreibbarer Speicher in Form eines RAM-Speichers ausgebildet sein.
- Anwenderprogrammspeicher zum Abspeichern des Anwenderprogramms. Dieser Speicher muß ebenfalls les- und beschreibbar ausgebildet sein. Ferner muß dieser Speicher nichtflüchtig oder zumindest als flüchtiger Speicher mit gepufferter Spannungsversorgung in Form eines RAM-Speichers ausgebildet sein.

Für Kleinsteuerungen ist aufgrund der eingeschränkten Funktionsvielfalt und des damit einhergehenden eingeschränkten Speicherplatzbedarfs häufig ein Mikrokontroller ohne den aufwendigen Peripherieaparat, wie er bei herkömmlichen speicherprogrammierbaren Steuerungen notwendig ist, ausreichend.

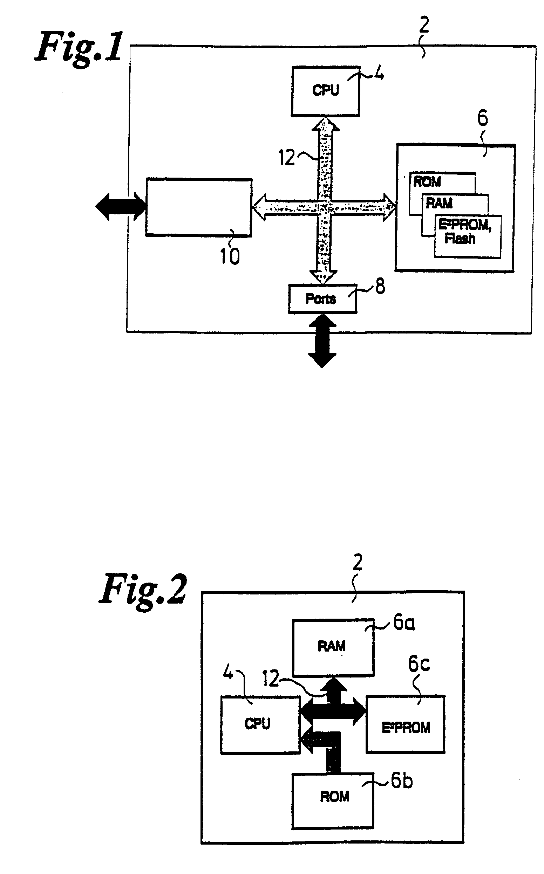

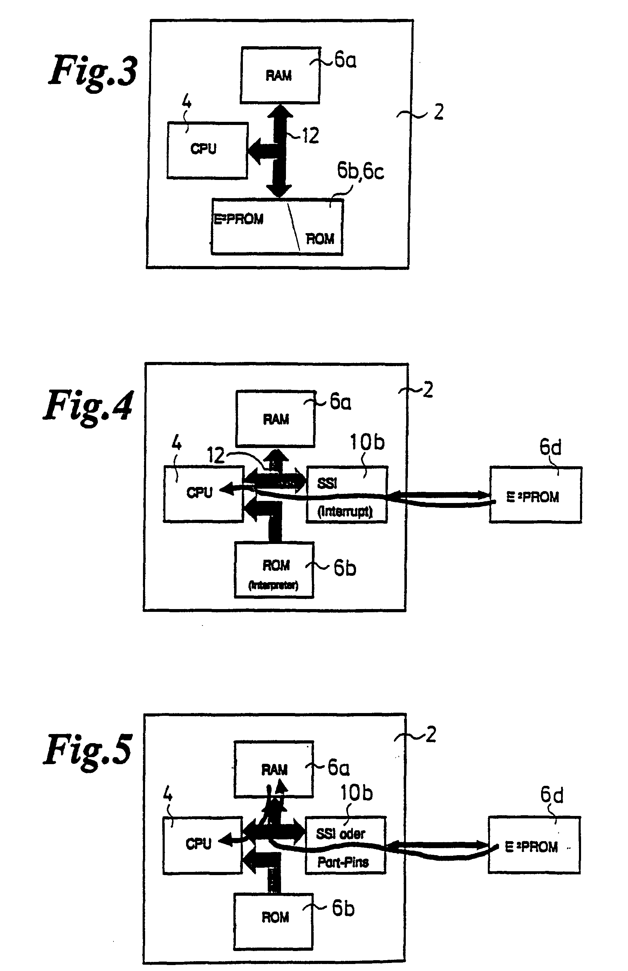

Aus dem Stand der Technik sind bereits derartige Schaltungsanordnungen in Form von standardisierten Mikrokontrollern bekannt. Aus dem Data Book der Firma NEC, µCOM-75x Family 4-bit CMOS Microcomputer, DB75XFAM..014V10, Seite 3-0-265 ist bereits ein Mikrokontroller bekannt, der bereits eine Zentraleinheit, eine ROM-Speichereinheit, eine RAM-Speichereinheit sowie eine E²PROM-Speichereinheit aufweist (siehe hierzu auch Fig. 2). Eine weitere Ausführungsform eines derartigen Mikrokontrollers ist dem Data Manual der Firma Texas Instruments, TMS370 Family, 1994, SPNS014B, Seite 1-15 bekannt. Dieser Mikrokontroller weist analog zu der in Fig. 3 schematisch dargestellten Ausführung eine Zentraleinheit sowie eine kombinierte RAM/E²PROM-Speichereinheit auf.

Die Fig. 1 zeigt die generelle Struktur eines Mikrokontrollers 2 in schematischer Darstellung. Ein derartiger Baustein besteht im wesentlichen aus einer Zentraleinheit 4 (CPU), einer internen Speichereinheit 6, Portanschlüssen 8 sowie weiterer interner Standardperipherie und Schnittstellenanschlüssen. Der besseren Übersicht halber sind die weitere Standardperipherie und die Schnittstellenanschlüsse in einem Block als interne Peripherie 10 dargestellt. Zum Datenaustausch sind die einzelnen Bausteine über interne Leitungen 12 miteinander verbunden (Pfeilrichtungen entsprechen den Datenflußrichtungen).

Es gibt sehr viele Varianten von Mikrokontrollern mit sehr unterschiedlichen Ausstattungen. So gibt es z.B. Mikrokontroller mit einer 4-Bit, 8-Bit, 16-Bit oder 32-Bit Zentraleinheit. Ferner differieren die Bausteine sehr stark im Hinblick auf den Stromverbrauch, die Geschwindigkeit und den internen Speicher. In Abhängigkeit von der Ausstattung bzw. der Leistung eines Mikrokontrollers differieren diese auch sehr stark im Hinblick auf die Preise.

Da einige Mikrokontroller schon über interne Speicher und Perpherie verfügen, ist der Einsatz zusätzlicher externer Ressourcen von der Leistung und der Komplexität der Steuerung sowie vom Preis und der Komplexität des Mikrokontrollers abhängig. Im allgemeinen kann man für Kleinsteuerungen davon ausgehen, daß es passende Mikrokontroller gibt, die alle notwendigen Ressourcen beinhalten.

In den Fig. 2 und 3 sind verschiedene, für den Einsatz in Kleinsteuerungen ggf. geeignete, Mikrokontroller 2 schematisch dargestellt. Diese Mikrokontroller 2 haben bereits alle, für den genannten Einsatzzweck, notwendigen Ressourcen integriert. So weist der in Fig. 2 dargestellte Mikrokontroller 2 neben der Zentraleinheit 4, einen als RAM ausgebildeten, flüchtigen les- und beschreibbaren Speicherteil 6a für die zwischenzeitliche Ablage von Verarbeitungsdaten, einen als ROM ausgebildeten, nichtflüchtigen lesbaren Speicherteil 6b zum Speichern eines Interpreters und einen als Flash oder als E²PROM oder als batteriegepuffertes RAM ausgebildeten, nichtflüchtigen les- und beschreibbaren Speicherteil 6c zum Speichern des Anwenderprogramms auf. In der Fig. 2 sind die Speicherteile im Data-Bereich (RAM 6a und E²Prom 6c) und im Code-Bereich (ROM 6b) derart voneinander getrennt, daß das Anwenderprogramm lediglich mittels eines Interpreters abgearbeitet werden kann. Der in Fig. 3 gezeigte Mikrokontroller 2 ist analog zu dem in Fig. 2 gezeigten Mikrokontroller 2 ausgebildet, mit dem Unterschied, daß hier alle Speicherteile 6a, 6b, 6c in einem gemeinsamen Code- und Data-Bereich zusammengefaßt sind, so daß ein Anwenderprogramm alternativ compiliert (Compiler) oder interpretiert (Interpreter) werden kann.

Derartige Mikrokontroller sind technisch durchaus für den Einsatz in Kleinsteuerungen geeignet. Die Nachteile derartiger integrierter Schaltungsanordnungen sind in erster Hinsicht die Kosten. Je mehr Funktionen bei integrierten Schaltungen auf engstem Raum realisiert sind, desto teurer wird der entsprechende Chip. Ferner ist die Auswahl an solchen standardisierten Kontrollern auf dem Markt stark eingeschränkt.

US-PS 5 507 001 offenbart einen Mikrocomputer, bei der eine Zentraleinheit, ein Programmspeicher, und ein Datenspeicher auf einem Chip integriert sind. Dieser Mikrocomputer kommuniziert über eine serielle Schnittstelle mit einem E²PROM, das als Erweiterung des Datenspeichers dient.

EP 0 437 387 B1 offenbart einen Mikrokontroller, bei dem auf einem Chip ein Mikroprozessor und ein ROM implementiert sind, welches das von dem Mikroprozessor abzuarbeitende Programm hardwaremäßig, d.h. in Form eine integrierten Halbleiterstruktur, implementiert. Für Testzwecke ist vorgesehen, über einen Multiplexer den Mikroprozessor statt mit dem ROM mit einer seriellen Schnittstelle zu verbinden, an welche ein EPROM angeschlossen werden kann, welches ein von dem Mikroprozessor abzuarbeitendes Programm enthält. Auf diese Weise soll erreicht werden, daß zur Korrektur von Fehlern des in dem ROM implementierten Programms in der Testphase nicht jeweils eine neue integrierte Struktur geschaffen werden muß. Zu Testzwecken kann ein geändertes Programm zunächst in das EPROM eingeschrieben werden und bei entsprechender Schaltung des Multiplexers durch den Mikroprozessor ausgetestet werden, bevor eine neue integrierte Struktur für das ROM geschaffen wird. In der für den Einsatz bestimmten Version ist jedoch die serielle Schnittstelle inaktiviert. Die Kontrolle des Mikroprozessors erfolgt dann ausschließlich mit dem auf dem Chip implementierten ROM.

Der Erfindung liegt das Problem zugrunde, eine ausreichend schnelle und leistungsstarke Schaltungsanordnung für Kleinsteuerungen zu schaffen, die mit kostengünstigsten Mitteln und mit geringstem Platzbedarf realisierbar ist.

Zur Lösung dieses Problems werden die Verwendung der Schaltungsanordnung mit den Merkmalen des Anspruchs 1 und ein Verfahren gemäß Anspruch 6 vorgeschlagen. Erfindungsgemäß weist die verwendete Schaltungsanordnung einen Mikrokontroller, der zumindest eine Zentraleinheit, einen flüchtigen Speicher in Form einer RAM-Speichereinheit, einen nichtflüchtigen Speicher (z.B. ROM) sowie eine Schnittstelle beinhaltet, und einen nichtflüchtigen Speicher in Form einer separaten Speichereinheit auf. Die separate Speichereinheit ist als serielle Speichereinheit ausgebildet, was den Vorteil hat, daß sie deutlich kleiner und preiswerter als eine parallele Speichereinheit ist. Der Nachteil in bezug auf Geschwindigkeit macht sich beim Anwendungsbereich derartiger Steuerungen bei Verwendung der erfindungsgemäßen Verfahren nicht bemerkbar.

In einer ersten Ausführungsform der Erfindung kommuniziert die externe Speichereinheit mit dem Mikrokontroller über eine interruptgesteuerte serielle Schnittstelle desselben, wobei das in der externen seriellen Speichereinheit befindliche Anwenderprogramm mittels Zentraleinheit und einem im nichtflüchtigen Speicher des Mikrokontrollers befindlichen Interpreter abgearbeitet wird.

In einer zweiten Ausführungsform kommuniziert die externe Speichereinheit mit dem Mikrokontroller entweder über eine serielle Schnittstelle (muß hier nicht unbedingt interruptgesteuert sein) oder direkt über die Portpins des Mikrokontrollers. Bei dieser Methode kopiert die Zentraleinheit den gesamten Inhalt der separaten Speichereinheit (das gesamte Anwenderprogramm nebst benötigter Daten) in den internen flüchtigen Speicher des Mikrokontrollers. Anschließend interpretiert die Zentraleinheit das Anwenderprogramm ausschließlich aus dem internen flüchtigen Speicher des Mikrokontrollers. Dieses Verfahren ermöglicht somit eine sehr hohe Verarbeitungsgeschwindigkeit. Mit Vorteil kann so eine kostengünstige Schaltungsanordnung realisiert werden, die dennoch die für eine Kleinsteuerung im Hinblick auf Verarbeitungsgeschwindigkeit, Funktionalität und Speicherplatzanforderung bezüglich der Anwenderprogramme entstehenden Anforderungen erfüllt. Derartige Schaltungsanordnungen, die komplett in einem Mikrokontroller untergebracht sind, sind derzeit zirka doppelt so teuer.

Weitere Vorteile und mögliche Ausführungsformen der Erfindung sind in den Unteransprüchen und in der Figurenbeschreibung enthalten. Es zeigen:
- Fig. 4: eine erste mögliche Ausführungsform der erfindungsgemäß verwendeten Schaltungsanordnung in schematischer Darstellung, und
- Fig. 5: eine zweite mögliche Ausführungsform der erfindungsgemäß verwendeten Schaltungsanordnung in schematischer Darstellung.

Die Fig. 4 zeigt eine erste mögliche Ausführungsform der erfindungsgemäß verwendeten Schaltungsanordnung. Hier findet ein Mikrokontroller 2 seine Anwendung, bei dem lediglich die Zentraleinheit 4, der flüchtige les- und beschreibbare Speicher 6a, der nichtflüchtige lesbare Speicher 6b und eine synchrone serielle Schnittstelle 10a Bestandteile des Mikrokontrollers 2 sind und die nichtflüchtige lesund beschreibbare Speichereinheit 6d eine serielle Speichereinheit ist, die als separate Einheit über eine Schnittstelle mit dem Mikrokontroller 2 verbunden ist. Da die zu verwendenden Mikrokontroller 2 in der Regel Standardkontroller sind, sind natürlich noch weitere Standardperipherieteile auf derartigen Mikrokontrollern integriert. Beim Gegenstand der Erfindung ist auch lediglich vorgesehen einen Mikrokontroller 2 ohne nichtflüchtigen les- und beschreibbaren Speicher (insbesondere für die Hinterlegung des Anwenderprogramms) zu verwenden und diesen durch eine seperate nichtflüchtige les- und beschreibbare Speichereinheit 6d zu ersetzen.

Bei der in Fig. 4 dargestellten Ausführung ist die Schnittstelle des Mikrokontrollers 2 als serielle interruptgesteuerte Schnittstelle 10a ausgebildet. Die Programmverarbeitung unter Verwendung dieser Schaltungsanordnung wird im folgenden beschrieben:

Als erstes muß das auszuführende Anwenderprogramm in die separate Speichereinheit 6d geladen werden. Dies geschieht z.B. durch direkte Programmierung über eine Tastatur der Kleinsteuerung oder durch Kopieren des Anwenderprogramms aus einem anderen Gerät (z.B. einem PC) über eine spezielle Schnittstelle der Kleinsteuerung. Anschließend wird die Bitfolge des ersten Befehls aus der Speichereinheit 6d in die Zentraleinheit 4 des Mikrokontrollers 2 geladen, von diesem dekodiert und ausgeführt (interpretiert) und gleichzeitig der Folgebefehl aus der Speichereinheit 6d in die Zentraleinheit 4 übermittelt. Hierfür wird nach jeder 8-Bit-Anweisung und nach jedem vollständigen Befehl (der auch aus mehreren Byte bestehen kann) ein Interrupt von der Schnittstelle 10a erzeugt und an die Zentraleinheit 4 übermittelt, so daß durch diese das Einlesen der jeweiligen Folgebefehle gewährleistet ist. Zur Abarbeitung des Anwenderprogramms bedient sich die Zentraleinheit 4 eines im ROM-Speicher 6b hinterlegten Interpreters. In einer bevorzugten Ausführung der Erfindung wird jeder Befehl des Anwenderprogramms mit maximal zwei Byte realisiert. Eine Ausführung von Befehlen mittels Compiler erfordert in der Regel vier bis sechs Byte pro auszuführenden Befehl. Durch die erfindungsgemäße Ausführung mittels Interpreter wird eine Speicherplatzersparnis von ca. 50% erreicht. Mit Vorteil können so auch kleinste und somit preiswerte Mikrokontroller mit einem RAM-Bereich für das Anwenderprogramm von ca. 256- 512 Byte Verwendung finden. Damit eine schnelle, reibungslose Verarbeitung des Anwenderprogramms gewährleistet ist, ist die Übertragungszeit pro Befehl der Schnittstelle 10a vorzugsweise kleiner/gleich der aus Verarbeitungszeit pro Befehl und Interruptdauer bestehenden Ausführungszeit des Mikrokontrollers 2. Technisch realisierbar, aber unerwünscht, sind bei der interruptgesteuerten Verarbeitung des Anwenderprogramms auch Übertragungszeiten der Schnittstelle 1 0a, die deutlich größer sind als die Ausführungszeit des Mikrokontrollers 2.

Die Fig. 5 zeigt eine zweite bevorzugte Ausführungsform der erfindungsgemäß verwendeten Schaltungsanordnung. Hier findet die Kommunikation bzw. der Datenaustausch zwischen Mikrokontroller 2 und separater Speichereinheit 6d entweder über eine serielle Schnittstelle 10a (gemäß Fig. 4) oder über eine Portpin-Schnittstelle 10b (gemäß Fig. 5) statt. Der Mikrokontroller 2 ist von seinem Aufbau her im wesentlichen äquivalent zu dem in Fig. 4 abgebildeten und oben beschriebenen Mikrokontroller 2 ausgebildet, wobei eine interruptfähige Schnittstelle, wie in Fig. 4 dargestellt, jedoch nicht notwendig ist. Die Art und Weise der Programmverarbeitung bei dieser Ausführungsform unterscheidet sich erheblich von der zuvor beschriebenen. Hier wird bei jedem Einschalten der Kleinsteuerung während der Hochlaufphase (Power-Up) der gesamte Inhalt, insbesondere das Anwenderprogramm, der separaten Speichereinheit 6d in den flüchtigen Speicher 6a (hier als RAM) des Mikrokontrollers 2 kopiert . Anschließend interpretiert die Zentraleinheit 4 mit Hilfe des im nichtflüchtigen lesbaren, integrierten Speichers 6b befindlichen Interpreters das Anwenderprogramm. Da das relativ zeitintensive Kopieren des Anwenderprogramms während der Hochlaufphase der Steuerung keine Rolle spielt, kann auch ein relativ langsamer separater Speicherbaustein, wie z.B. ein I²C-E²PROM (E²PROM für eine I²C-Schnittstelle) verwendet werden. Der I²C-E²PROM bietet gegenüber anderen seriellen Speicherbausteinen den Vorteil einer leitungssparenden, zweiadrigen Verbindung. Darüber hinaus sind serielle E²PROM-Bausteine im Gegensatz zu parallelen E²PROM-Speicherbausteinen deutlich preiswerter und kleiner. Bei Verwendung eines noch einfacheren Mikrokontrollers 2 -ohne spezifische serielle Schnittstelle 10a- kann die Übertragung des Anwenderprogramms aus der separaten Speichereinheit 6d in den RAM-Speicher 6a des Mikrokontrollers 2 auch direkt über Portpins softwaregesteuert erfolgen. Der Vorteil bei dieser zudem auch sehr preiswerten Methode ist eine besonders gute Störfestigkeit. Die zu übertragenden Daten können wegen der niedrigeren Übertragungsgeschwindigkeit sicher gefiltert werden und alle Datenblöcke können praktisch ohne zusätzlichen Zeit- und Speicherverlust mit einer globalen Checksumme versehen werden.

## Patentansprüche

1. Verwendung einer Schaltungsanordnung, wobei die Schaltungsanordnung umfaßt:
- eine Zentraleinheit (4) zur Verarbeitung von Daten,
- einen flüchtigen Speicher (6a), wie RAM-Speicher, zur Zwischenspeicherung von Daten,
- einen nichtflüchtigen Speicher (6b), wie ROM- oder EPROM-Speicher oder dergleichen, zur dauerhaften Speicherung des Betriebssystems,
- eine als E²PROM ausgebildeten nichtflüchtigen les- und beschreibbaren Speichereinheit (6d) zur Speicherung des Anwenderprogramms, und
- eine Schnittstelle (10a) zur Kommunkation mit externen Mitteln unter Verwendung eines Mikrokontrollers (2),
**dadurch gekennzeichnet, daß** für die Verwendung der Schaltungsanordnung zur Speicherplatzverwaltung für die Abarbeitung von Anwenderprogrammen in Kleinsteuerungen die Kleinsteuerung im Vergleich mit herkömmlichen speicherprogrammierbaren Steuerungen im Hinblick auf ihre Funktionsvielfalt und ihren Speicherplatz minimiert ist, indem
- lediglich die Zentraleinheit (4), der flüchtige Speicher (6a), der nichtflüchtige Speicher (6b) und die Schnittstelle (10a; 10b) Bestandteile des Mikrokontrollers (2) sind,
- die Schnittstelle (10a) für eine serielle Übertragung eingerichtet ist,
- die als E²PROM ausgebildete nichtflüchtige les- und beschreibbare Speichereinheit (6d) eine externe serielle Speichereinheit ist, und
- die Speichereinheit (6d) als externe separate Einheit über die Schnittstelle (10a) mit dem Mikrokontroller (2) verbunden ist.

2. Verwendung nach Anspruch 1, **gekennzeichnet durch** einen Anwenderprogrammspeicher, der eine Größe von maximal 512 Byte aufweist.

3. Verwendung nach Anspruch 1 oder 2, **dadurch gekennzeichnet, daß** die Befehle des Anwenderprogramms aus der separaten externen seriellen Speichereinheit (6d) über die Schnittstelle (10a, 10b) zu dem Mikrokontroller (2) übertragen werden.

4. Verwendung nach einem der Ansprüche 1 bis 3, **dadurch gekennzeichnet, daß** die Schnittstelle (10a) eine serielle, interruptgesteuerte Schnittstelle ist.

5. Verwendung nach Anspruch 4, **dadurch gekennzeichnet, daß** die Übertragungszeit pro Befehl der Schnittstelle (10a) nicht deutlich größer - vorzugsweise kleiner - als die aus Verarbeitungszeit pro Befehl und Interruptdauer pro Befehl bestehende Ausführungszeit des Mikrokontrollers (2) ist.

6. Verwendung nach einem der Ansprüche 1 bis 3, **dadurch gekennzeichnet, daß** die Schnittstelle (10b) durch Portpins des Mikrokontrollers (2) gebildet wird, wobei der Mikrokontroller (2) mit einer Software ausgestattet ist, welche die Kommunikation mit der als E²PROM ausgebildeten externen seriellen Speichereinheit steuert.

7. Verwendung nach einem der Ansprüche 3 bis 5, **gekennzeichnet durch** die folgenden Schritte umfaßt:
a) Einlesen der Bitfolge eines ersten Befehls aus der externen seriellen Speichereinheit (6d) in die Zentraleinheit (4) des Mikrokontrollers (2),
b) Interpretieren des Befehls **durch** die Zentraleinheit (4) und gleichzeitiges Einlesens des Folgebefehls aus der externen seriellen Speichereinheit (6d) in die Zentraleinheit (4) des Mikrokontrollers (2) **durch** die Schnittstelle (10a),
c) Erzeugen eines Interrupts nach jedem abgeschlossenen Einlesevorgang einer festen Bitlänge und nach jedem abgeschlossenem Befehl und
d) Abarbeiten des Anwenderprogramms **durch** Wiederholung der Verfahrensschritte b) und c).

8. Verwendung nach Anspruch 6, **gekennzeichnet durch** die folgenden Verfahrensschritte:
e) Kopieren des gesamten Anwenderprogramms aus der separaten externen seriellen Speichereinheit (6d) in den flüchtigen Speicher (6a) des Mikrokontrollers (2) während der Hochlaufphase beim Einschalten der Steuerung,
f) Interpretieren des Anwenderprogramms **durch** die Zentraleinheit (4) direkt aus dem flüchtigen Speicher (6a).

## Claims

1. Use of a circuit arrangement, wherein the circuit arrangement comprises:
- a central unit (4) for processing data,
- a volatile memory (6a), such as a RAM, for intermediate data storage,
- a non-volatile memory (6b), such as a ROM or EPROM or the like, for permanent storage of the operating system,
- a non-volatile readable and writable memory unit (6d) constructed as aN E²PROM for storing the application program and
- an interface (10a) for communication with external means using a micro-controller (2),
**characterised in that** for use of the circuit arrangement for memory space management for processing application programs in mini-controllers, the mini-controller is minimised compared with conventional memory-programmable controllers in respect of its functional versatility and its memory space, **in that**
- only the central unit (4), the volatile memory (6a), the non-volatile memory (6b) and the interface (10a; 10b) are parts of the microcontroller (2),
- the interface (10a) is arranged for serial transmission,
- the non-volatile readable and writable memory unit (6d) constructed as aN E²PROM is an external serial memory unit and
- the memory unit (6d) is connected as an external separate unit to the microcontroller (2) via the interface (10a).

2. Use according to claim 1, **characterised by** an application program memory having a maximum size of 512 bytes.

3. Use according to claim 1 or 2, **characterised in that** the commands of the application program are transmitted from the separate external serial memory unit (6d) to the microcontroller (2) via the interface (10a, 10b).

4. Use according to any one of claims 1 to 3, **characterised in that** the interface (10a) is a serial interrupt-controlled interface.

5. Use according to claim 4, **characterised in that** the transmission time for each command of the interface (10a) is not much larger than - is preferably smaller than - the execution time of the microcontroller (2) consisting of the processing time per command and the interrupt time per command.

6. Use according to any one of claims 1 to 3, **characterised in that** the interface (10b) is formed by port pins of the microcontroller (2), the microcontroller (2) being equipped with a software which controls the communication with the external serial memory unit constructed as an E²PROM.

7. Use according to any one of claims 3 to 5, **characterised by** the following steps:
a) reading in of the bit sequence of a first command from the external memory unit (6d) into the central unit (4) of the microcontroller (2) ,
b) interpretation of the command by the central unit (4) and simultaneous reading-in of the sequential command from the external memory unit (6d) into the central unit (4) of the microcontroller (2) by the interface (10a),
c) generation of an interrupt after each completed reading-in operation of a fixed bit length and after each completed command and
d) processing of the application program by repetition of the method steps b) and c).

8. Use according to claim 6, **characterised by** the following method steps:
e) copying of the entire application program from the separate external serial memory unit (6d) into the volatile memory (6a) of the microcontroller (2) during the running-up phase on the switching on of the control,
f) interpretation of the application program by the central unit (4) directly from the volatile memory (6a).

## Revendications

1. Utilisation d'un circuit qui comprend :
- une unité centrale (4) pour le traitement de données,
- une mémoire volatile (6a), telle que mémoire RAM, pour la mise en mémoire tampon de données,
- une mémoire rémanente (6b), telle que mémoire ROM ou EPROM ou analogue, pour la mémorisation durable du système d'exploitation,
- un bloc mémoire rémanent lisible et inscriptible réalisé sous forme de EEPROM (6d) pour la mémorisation d'un programme d'application, et
- une interface (10a) pour la communication avec des moyens externes avec utilisation d'un microcontrôleur (2),
**caractérisée par le fait que** pour l'utilisation du dispositif pour la gestion d'emplacements de mémoire pour le passage de programmes d'application dans des microcommandes, la microcommande est minimisée en ce qui concerne sa multiplicité de fonctions et sa taille de mémoire comparativement aux commandes programmables par mémoire classiques, dans laquelle
- seules l'unité centrale (4), la mémoire volatile (6a), la mémoire rémanente (6b) et l'interface (10a ; 10b) font partie du microcontrôleur (2),
- l'interface (10a) est conçue pour une transmission série,
- le bloc mémoire rémanent lisible et inscriptible réalisé sous forme de EEPROM (6d) est un bloc mémoire série externe, et
- le bloc mémoire (6d) est relié comme bloc séparé externe au microcontrôleurr (2) par l'interface (10a).

2. Utilisation selon la revendication 1, **caractérisée par** une mémoire de programmes d'application ayant une capacité d'au plus 512 octets.

3. Utilisation selon l'une des revendications 1 et 2, **caractérisée par le fait que** les instructions du programme d'application sont transmises du bloc mémoire série externe séparé (6d) au microcontrôleur (2) par l'interface (10a, 10b).

4. Utilisation selon l'une des revendications 1 à 3, **caractérisée par le fait que** l'interface (10a) est une interface série commandée par interruption.

5. Utilisation selon la revendication 4, **caractérisée par le fait que** le temps de transmission par instruction de l'interface (10a) n'est pas nettement supérieur (et est de préférence inférieur) au temps d'exécution du microcontrôleur (2) constitué du temps de traitement par instruction et de la durée d'interruption par instruction.

6. Utilisation selon l'une des revendications 1 à 3, **caractérisée par le fait que** l'interface (10b) est formée par des broches d'accès du microcontrôleur (2), le microcontrôleur (2) étant équipé d'un logiciel qui commande la communication avec le bloc mémoire série externe réalisé sous forme de EEPROM.

7. Utilisation selon l'une des revendications 3 à 5, **caractérisée par** les étapes suivantes :
a) introduction de la suite de bits d'une première instruction, du bloc mémoire série externe (6d), dans l'unité centrale (4) du microcontrôleur(2),
b) interprétation de l'instruction par l'unité centrale (4) et en même temps introduction de l'instruction séquentielle, du bloc mémoire série externe (6d), dans l'unité centrale (4) du microcontrôleur (2) par l'interface (10a),
c) production d'une interruption après chaque opération d'introduction achevée d'une longueur de bits fixe et après chaque instruction achevée et
d) passage du programme d'application par répétition des étapes de procédé b) et c).

8. Utilisation selon la revendication 6, **caractérisée par** les étapes de procédé suivantes :
e) copie du programme d'application entier, du bloc mémoire série externe séparé (6d), dans la mémoire volatile (6a) du microcontrôleur (2) pendant la phase de démarrage lors de la mise en marche de la commande,
f) interprétation du programme d'application par l'unité centrale (4) directement à partir de la mémoire volatile (6a).
